# EUROPEAN PATENT SPECIFICATION

(11) **EP 4 015 847 B1**
(45) Date of publication and mention of the grant of the patent: **31.07.2024**
(21) Application number: 21215048.6
(22) Date of filing: 16.12.2021
(51) Int. Cl.: F16B 45/02

(54) **CARABINER WITH AT LEAST TRIPLE-ACTION SAFETY LOCKING MECHANISM**
KARABINER MIT MINDESTENS DREIFACHEM SICHERHEITSVERRIEGELUNGSMECHANISMUS
MOUSQUETON DOTÉ D'AU MOINS UN MÉCANISME DE VERROUILLAGE DE SÉCURITÉ TRIPLE ACTION

(30) Priority: 16.12.2020 IT 202000031058
(43) Date of publication of application: 22.06.2022
(73) Proprietor: OBER ALP S.p.A., 39100 Bolzano (IT)
(72) Inventor: VINATZER, Benno, I-39100 BOLZANO (IT); RESCH, Egon, I-39100 BOLZANO (IT)
(74) Representative: Mitola, Marco

(56) References cited:
- EP-A2- 1 229 258
- US-A1- 2003 167 608
- US-A1- 2008 022 497
- US-A1- 2012 324 684
- US-B2- 8 955 203

## Description

### FIELD OF APPLICATION

This invention relates to a carabiner having a triple-action safety locking mechanism.

### PRIOR ART

As is well known, climbing carabiners consist of an open ring or main body, i.e., having an overall 'C' shape, and an opening lever to open and close the ring perimeter.

Carabiners are equipped with safety locking mechanisms that are intended to prevent the lever from opening accidentally, for obvious safety reasons.

Various solutions for safety locking mechanisms exist in the art.

For example, a ferrule system is known to be used, coaxial to the lever and screwable onto the ring. However, this system, which is widely used in the industry, has some drawbacks and limitations.

In fact, due to the vibrations and rubbing action of the rope accommodated in the ring, the ferrule may unscrew accidentally, causing the potential risk of the ring opening accidentally.

Moreover, this ferrule solution makes it difficult to visually verify the correct and complete locking of the safety mechanism; in other words, the user, by looking at the ferrule, is not able to verify whether it has been completely screwed into the closed position or not.

There are also more refined solutions, so-called dual-action solutions. Dual-action means that, in order to open the carabiner, two separate actions must be performed with the hand. Stipulating more than one action to open the carabiner is obviously a safety element against the risk of opening accidentally.

Said dual-action solutions only partially solve the problem of accidental opening and, in any case, are subject to the risk of incorrect locking when closing the carabiner.

In some particular situations, even dual-action solutions may present risks of opening accidentally, for example as a result of repeated rubbing of the user's rope or equipment.

In order to further increase the degree of safety of the carabiner, there are carabiner solutions with a triple-action safety locking mechanism known in the art; in other words in these solutions the succession of three distinct steps to open said carabiner is required.

These solutions definitively solve the problem of the carabiner opening accidentally, but involve a certain operational difficulty for the user, who is not always able to unlock the carabiner using only one hand, especially while wearing a glove, as sometimes happens during an excursion.

In addition, said solutions with the triple-action safety lock are quite complex and expensive to implement.

Document US 2003/0167608 A1 discloses a snap-hook equipped with a locking ring with a separating bar.

### DISCLOSURE OF THE INVENTION

The need to solve the drawbacks and limitations mentioned with reference to the prior art is therefore felt.

In particular, the need is felt in the art to provide a carabiner with an at least triple-action safety locking mechanism, and therefore free from the risk of accidental opening, which ensures, at the same time, a simplicity of operation, even with one hand and while wearing a glove, when maximum safety is not required, and which has moderate construction and assembly costs.

This need is satisfied by a carabiner according to claim 1.

### DESCRIPTION OF THE DRAWINGS

Further features and advantages of this invention will become more apparent from the following description of preferred and non-limiting embodiments thereof, in which:
Fig. 1-2 depict a side view and a perspective view, respectively, of a carabiner according to an embodiment of this invention, in a closed and locked configuration;
Fig. 3 is a sectional view of the carabiner in Fig. 1-2;
Fig. 4-5 are a side view and a perspective view, respectively, of the carabiner in Fig. 1-3, in a closed and unlocked configuration, following the rotation of the divider element;
Fig. 6 is a sectional view of the carabiner in Fig. 4-5;
Fig. 7-8 are a side view and a perspective view, respectively, of the carabiner in Fig. 1-3, in a closed and unlocked configuration, following rotation of the divider element, according to a possible variant embodiment;
Fig. 9 is a sectional view of the carabiner in Fig. 7-8;
Fig. 10-11 are a side view and a perspective view, respectively, of a carabiner according to an embodiment of this invention, in an open configuration;
Fig. 12 is a sectional view of the carabiner in Fig. 10-11;

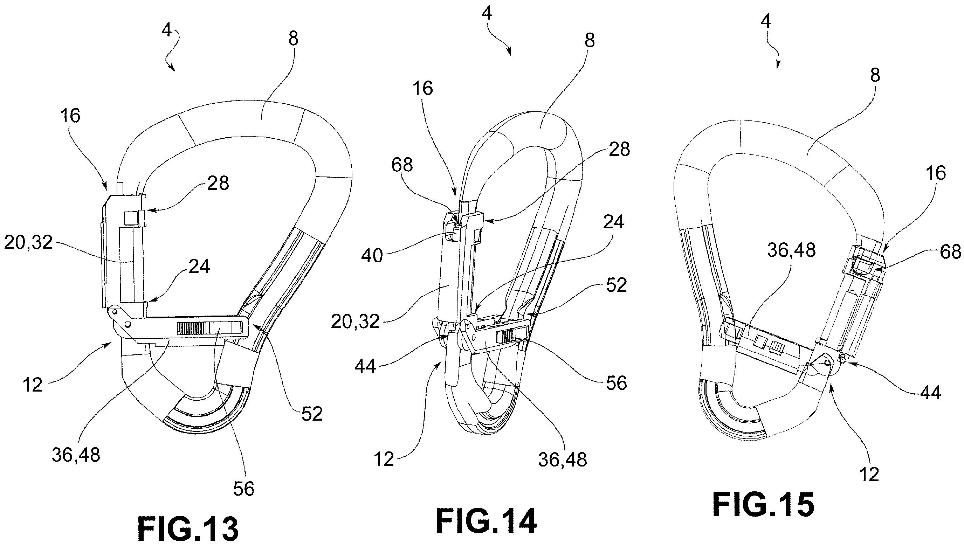

Fig. 13-14 are a side view and a perspective view, respectively, of a carabiner according to a further embodiment of this invention, in a closed and locked configuration;
Fig. 15 is a sectional view of the carabiner in Fig. 13-14;

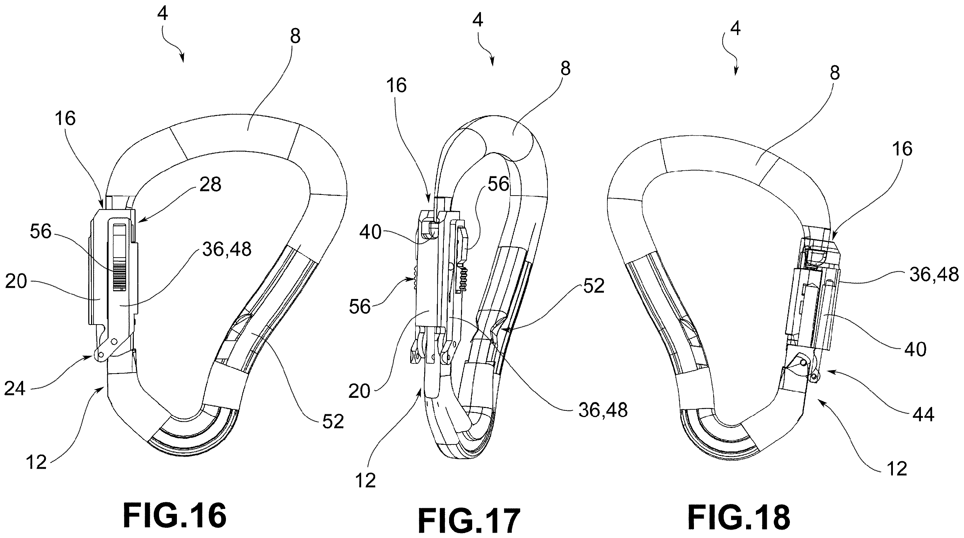

Fig. 16-17 are a side view and a perspective view, respectively, of the carabiner in Fig. 13-15, in a closed and unlocked configuration, following rotation of the divider element;
Fig. 18 is a sectional view of the carabiner in Fig. 16-17;

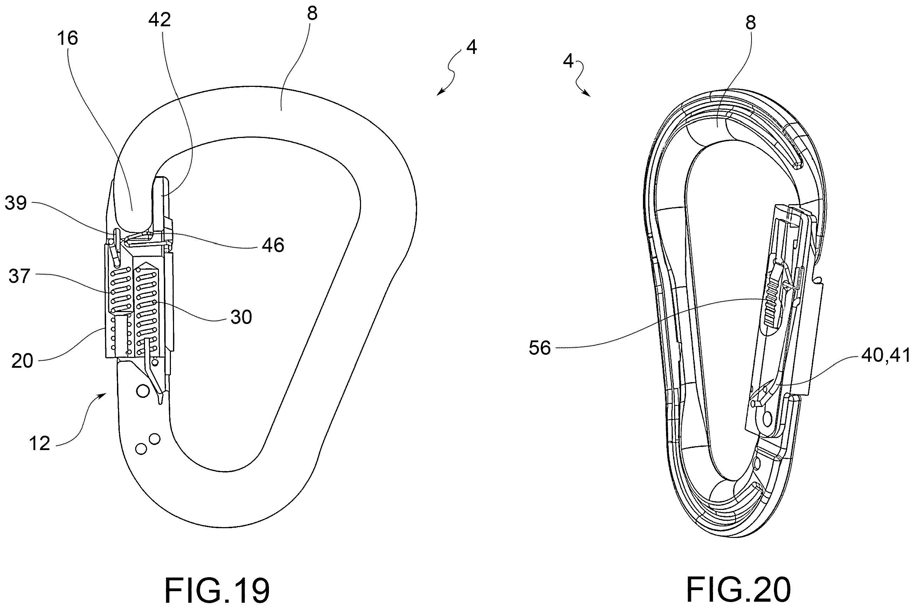

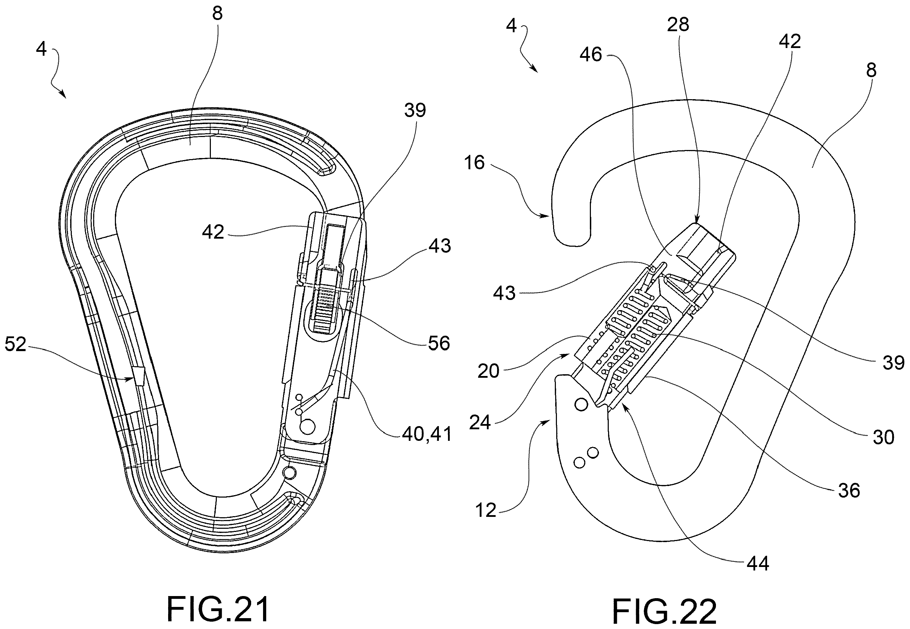

Fig. 19-21 are sectional views, from different angles, of a carabiner according to a further embodiment of this invention, in a closed and unlocked configuration;

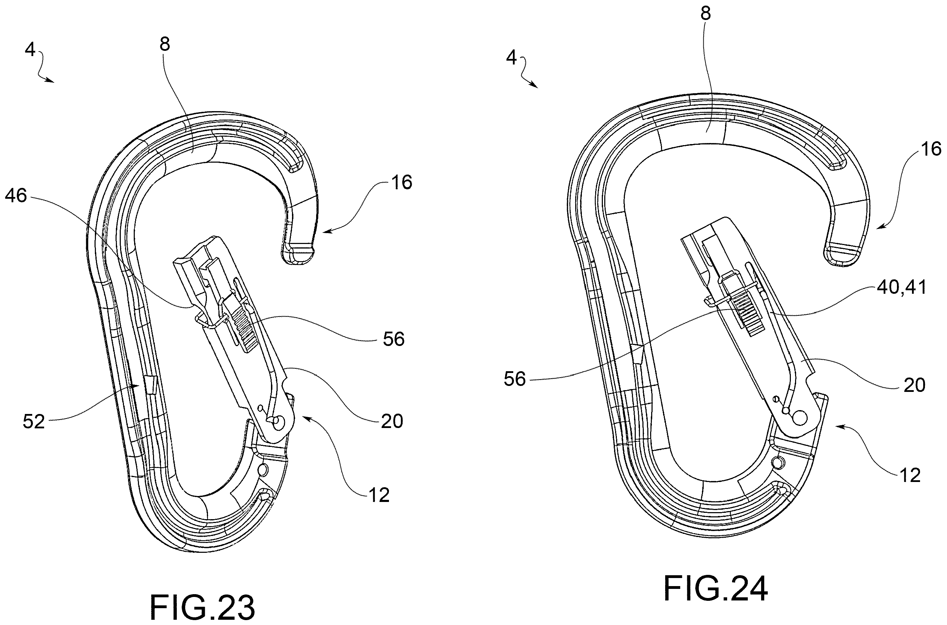

Fig. 22-24 are sectional views, from different angles, of the carabiner in Fig. 19-21, in the open configuration;

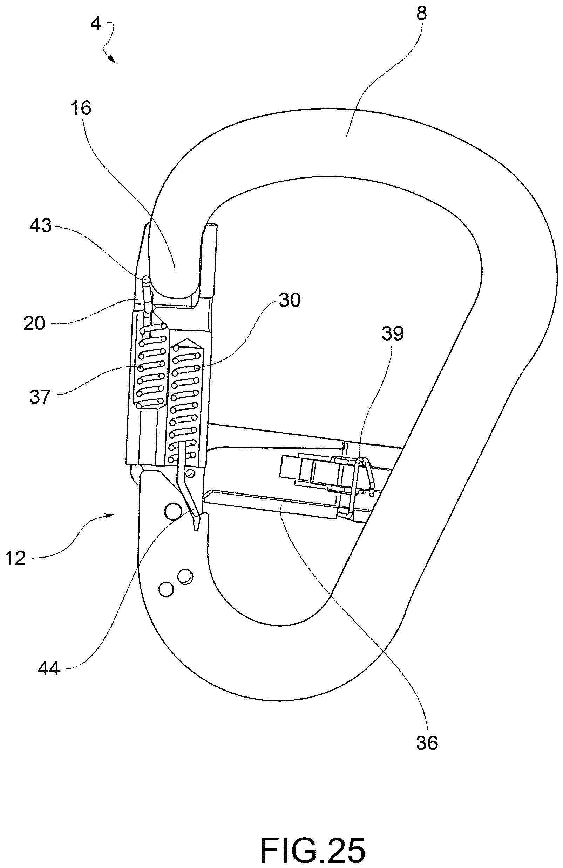

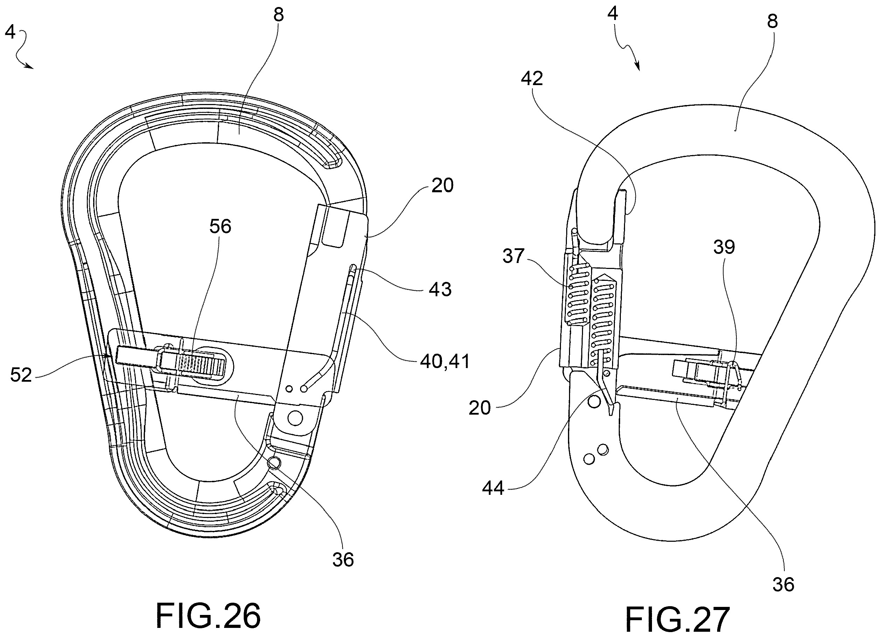

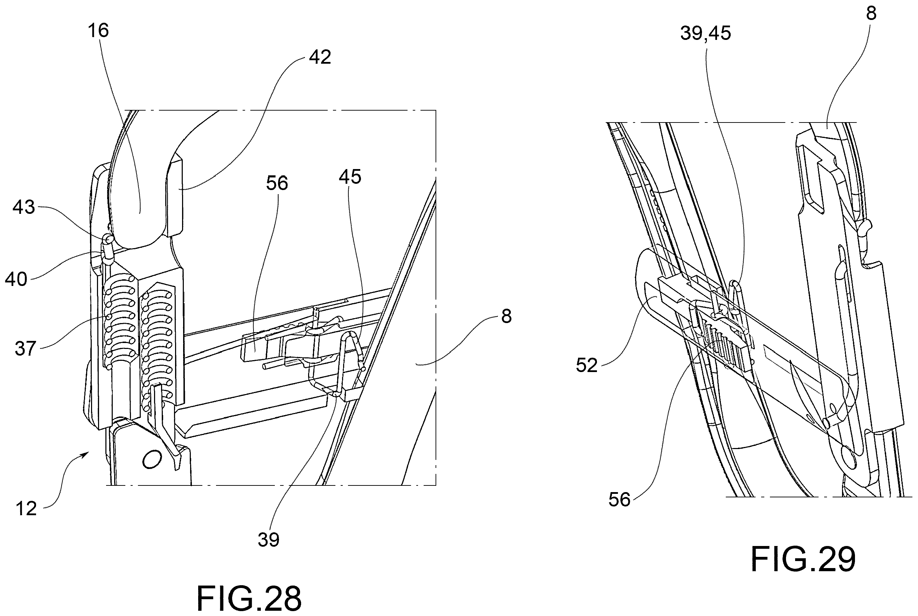

Fig. 25-29 are sectional views, from different angles, of the carabiner in Fig. 19-21 in the closed and locked configuration, following the rotation of the divider element.

The elements or parts of elements common to the embodiments described hereinafter will be indicated with the same reference numerals.

### DETAILED DESCRIPTION

With reference to the aforesaid figures, an overall schematic view of a carabiner comprising a triple-action safety locking mechanism according to a possible embodiment of this invention has been globally indicated with 4.

The carabiner 4 comprises an open ring 8 having an overall 'C' shape extending between a first end 12 and a second end 16 separated from each other, and an openable lever 20 for opening and closing the ring 8 by connecting said first and second ends 12,16 to each other.

The lever 20 is hinged to said first end 12 at a base 24 and is provided with a movable tip 28 adapted to interface with the second end 16, so as to connect said first and second ends 12,16 in a closed configuration of the carabiner 4.

The lever 20 comprises a main body 32 extending between the base 24 and the tip 28; the carabiner further comprises a divider element 36 mechanically connected to a locking element 40 of the lever 20.

Preferably, the lever 20 is provided with a return spring 30 that biases the lever 20 to elastically return to the closed position of the ring 8.

The locking element 40 of the lever 20 is configured to transition from a retracted configuration, wherein it does not interfere with the second end 16 of the ring 8

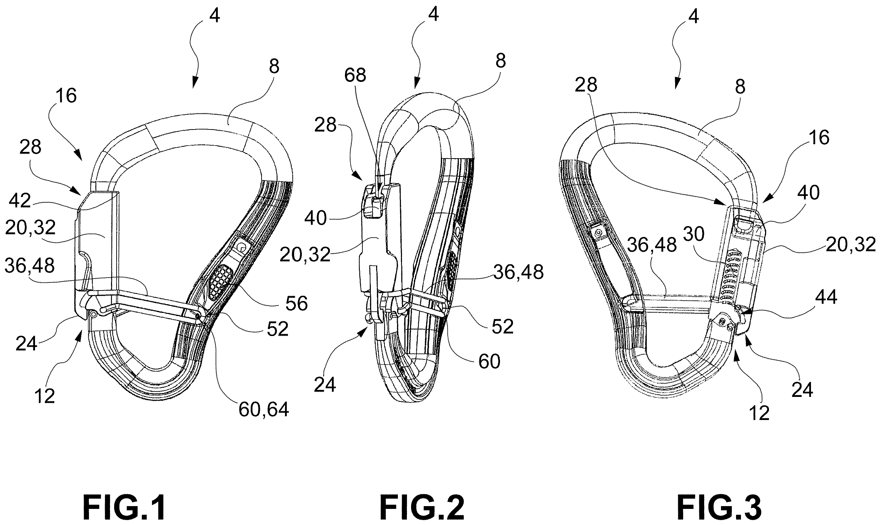

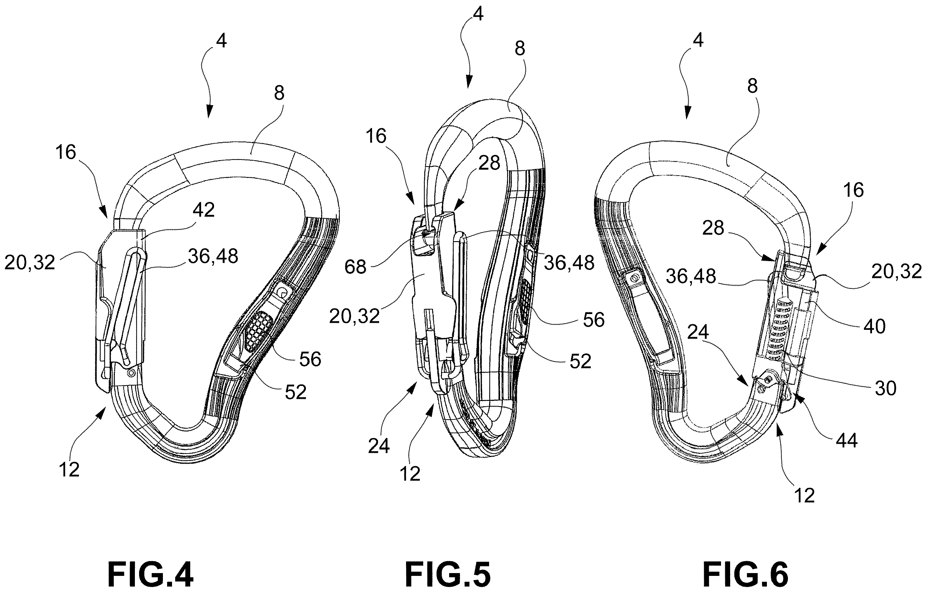

(Fig. 4-12), to an extracted configuration, wherein it interferes with the second end 16 by preventing the lever 20 from opening (Fig. 1-3).

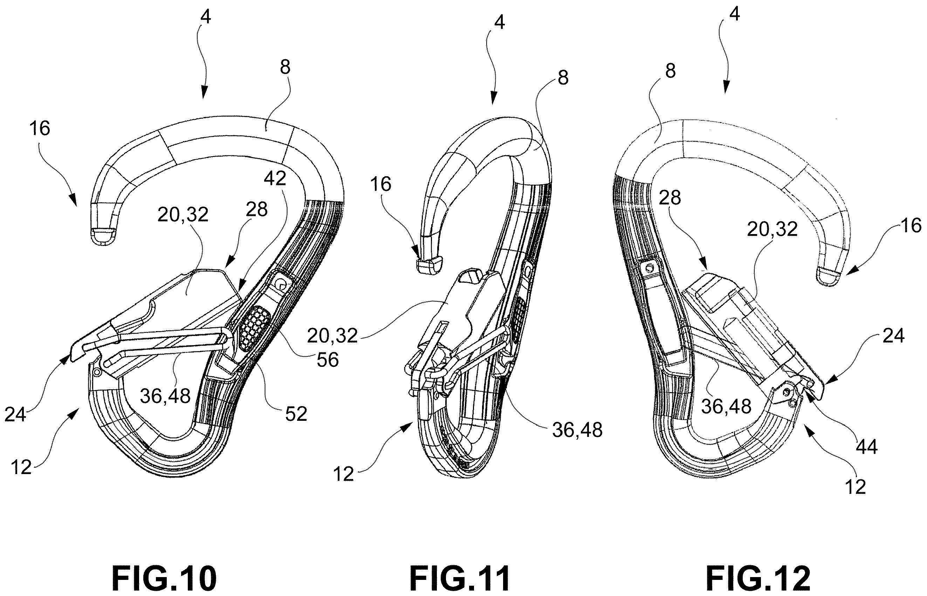

According to a possible embodiment, said locking element 40 is a removable peg, at least partially housed within the main body 32 of the lever 20; when the peg 40 is in the retracted or lowered position, it does not interfere with the second end 16 and therefore allows the lever 20, which may be rotated toward the inside of the ring, to open (Fig. 10-12). On the other hand, when the peg 40 is in the extracted or raised position (Fig. 1-3), it will interfere in abutment with the second end 16 of the ring 8 when an attempt is made to rotate the lever 20 to the open position. In other words, in the raised position, the peg or locking element 40 acts as an undercut with respect to the second end 16 of the ring 8.

Said locking element 40 may be a peg, a pin, a plug, a tube, at least partially within the main body (32) of the lever (20).

According to a further embodiment, said locking element 40 is a sleeve or a sliding bushing at least partially outside the main body 32 of the lever 20.

According to a further embodiment, said locking element 40 is a metal wire bent so as to interfere in abutment, in a closed and locked configuration, against the second end 16, preventing the lever 20 from opening. In an unlocked configuration, said wire is lowered towards the base 24 so as not to interfere with the second end 16, thereby allowing the lever 20 to be opened. For example, said wire has an overall 'U' configuration comprising a pair of branches 41, hinged at the base 24 and connected by a bridge portion 43 that forms the undercut against the second end 16 of the ring 8.

The rotation of the lever 20 in the opposite direction, i.e., away from the ring 8, is prevented by the presence of an upper edge or undercut 42 that abuts against a portion of the second end 16.

It is also possible to form, as a locking element 40, a peg which, in an extracted configuration ends up at least partially housed in a housing 68 obtained near the second end 16 of the ring 8.

The divider element 36 is movable from an unlocked or open position, wherein the locking element 40 is in a retracted or lowered configuration, to a locked or closed position, wherein the locking element 40 is in an extracted or raised configuration.

The mechanical connection between the divider element 36 and the locking element 40 may be made by the insertion of a lever and/or cam mechanism 44, or an eccentric, a slot, a groove, a cord, a toothed wheel.

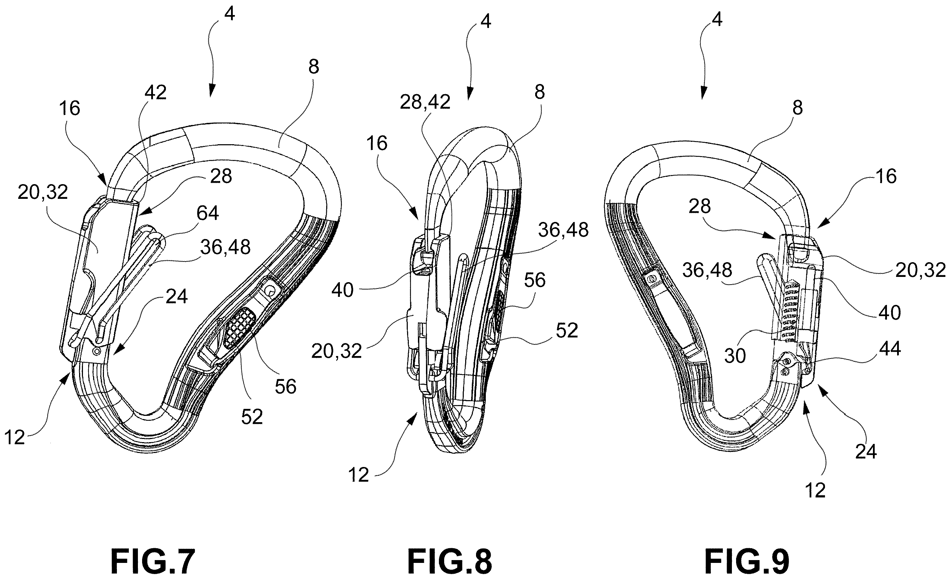

According to a possible embodiment, the divider element 36 comprises at least one rod 48 hinged to said first end 12, and pivotable from the open position, wherein it is arranged parallel (Fig. 4-6) or in proximity (Fig. 7-9) to the closed position, wherein it is secured to a support portion 52 of said ring 8 opposite the lever 20.

For example, said support portion 52 comprises at least one locking/unlocking device 56 of the divider element 36 configured to lock and unlock the divider element 36 in said closed position.

According to a further embodiment, said support portion 52 of the ring 8 is configured to interface with at least one locking/unlocking device 56 associated with the divider element 36, configured to lock and unlock the divider element 36 in said closed position.

For example, the locking/unlocking device 56 is an elastic tab configured to be elastically pressed and/or deformed to lock/unlock the divider element 36.

For example, the locking/unlocking device 56 comprises a protuberance 60 configured to engage in a seat 64 formed on said divider element 36.

As mentioned above, the locking/unlocking device 56, for example in the form of at least one elastic tab, may be directly associated with the divider element 36. In said configuration, the divider element 36 is provided with at least one coupling element 39, configured to be able to constrain the divider element 36 to the lever 20 or release them from each other. In particular, according to a possible embodiment, said coupling element 39 is configured to move from a deformed or compressed configuration, wherein it releases the divider element 36 and the lever 20 from each other, to an undeformed or extended configuration wherein it constrains the divider element 36 and the lever 20 to each other. It should be noted that when the lever 20 and the divider element 36 are in a closed configuration, said coupling element 39 interferes with the second end 16 of the ring, bringing it into a deformed or compressed configuration. This means that, as long as the lever 20 is in the closed position, the lever 20 and the divider element 36 may be mechanically released from each other. As soon as the lever 20 is moved to the open position, the coupling element 39 is extended, because it is no longer compressed by the second end 16, and therefore it is no longer possible to release the lever 20 and the divider element 36 from each other, not even by acting on the elastic tabs 56 (associated with said divider element). This aspect constitutes an advantage since it may not occur accidentally that the user, after opening the lever 20 in the intermediate position, by pressing the elastic tabs 56, may unlock the lever 20, which would otherwise be returned by the return spring 30, for example by interfering with a rope/cord previously inserted by the user inside the ring. For example, the coupling element 39 has an 'S' shape. For example, the coupling element 39 is constrained to the divider element 36 and has at least one coupling end 45 adapted to fit into a corresponding seat or stop 46 formed on the lever 20. Engagement between the coupling end 45 and the seat or stop 46 may only occur when the coupling element 39 is in an undeformed or extended configuration, whereas if the coupling element is compressed, said coupling end 45 does not engage with the seat or stop 46.

The coupling element may be shaped as a spring, which transitions from the undeformed configuration to the deformed configuration, or may also comprise a rigid, undeformed element connected to a spring or elastically deformable element (which transitions from the undeformed configuration to the deformed configuration).

According to a further embodiment, the locking element 40 is associated with the divider element 36.

Preferably, the divider element 36 is provided with a return spring 37 that biases the divider element 36 to elastically return to the open/closed position or a predetermined position.

According to an embodiment, the divider element 36 comprises a pair of rods 48 hinged to said first end 12 and/or said lever 20, arranged on opposite sides with respect to the main body 32.

In said embodiment, the support portion 52 comprises two locking/unlocking tabs 56 of the divider element 36, each configured to lock and unlock a corresponding rod 48 of the divider element 36 in said closed position.

The operation of a carabiner according to this invention will now be described.

Specifically, one starts in the initial configuration in which the carabiner is closed and locked (Fig. 1-3) . In such a configuration, the locking element 40 prevents rotation of the lever 20 toward the inside of the ring 8. As shown, the outward rotation is, as always, prevented by the upper edge 42 of the lever 20.

Then, for example using a single finger, the user begins the step of releasing the divider element 36 which is rotated towards the lever 20. Due to the mechanical connection between the divider element 36 and the locking element 40, rotating the divider element 36 results in lowering or retracting the locking element 40. At this stage the carabiner 4 is still closed, but unlocked (Fig. 4-6; 7-9), since the locking element 40, being lowered, is not able to prevent the opening of the lever 20.

The locking element 40 may be unlocked either by bringing the divider element into a raised position and close to the lever 20 (Fig. 7-9) or, according to a further embodiment, into a position parallel to and overlapping the lever 20 (Fig. 4-6).

It should be noted that in order to rotate the lever 20, it is necessary to first press the locking/unlocking tabs 56 so as to disengage the coupling between the protuberance 60 and the corresponding seat 64.

Then the user may proceed with opening the lever 20 by rotating it toward the inside of the ring 8, there being no longer any constraint between the locking element 40 and the second end 16 of the ring 8 (Fig. 10-12) .

As shown, therefore, in order to open the carabiner, at least three distinct steps are required, which may be summarized as unlocking the divider element 36 by acting on the locking/unlocking tabs 56, rotating the divider element 36 so as to retract or lower the corresponding locking element 40, and rotating the opening of the lever 20.

On the other hand, a single operation is sufficient to close and lock the lever 20 from the open position: the user simply has to rotate the divider element 36 away from the lever 20, so as to raise the locking element 40 so that said locking element interferes with the second end 16 of the ring 8.

It should be noted that the carabiner according to this invention is at least a "three-way lock" with the ability to be fixed in the unlocked position, like a normal carabiner without a lock. In other words, the user may decide to use the carabiner as a normal device without a lock and, if necessary, only when he decides to close it definitively does the carabiner become a "three-way lock" device for the next opening step. Thus, the carabiner according to this invention gives the user the ability to override the self-closing mechanism typical of category III carabiners (i.e., three-way lock or higher).

Due to this feature, the carabiner may be easily removed from the harness and the rope inserted, even with several maneuvers, to place a knot in the carabiner. The solutions of the prior art do not allow this simplified use of the carabiner (which, if necessary, becomes a high-safety device, as it is provided with three safety devices for the opening thereof).

As may be appreciated from that which has been described, the carabiner with an at least triple-action safety locking mechanism according to this invention enables the drawbacks presented in the prior art to be overcome.

In particular, this invention provides a user with a carabiner having an at least triple-action safety locking mechanism that prevents any type of accidental opening.

Therefore, there is no possibility of accidentally opening the carabiner due to shocks and/or rubbing action of the rope housed inside and/or vibrations during the user's excursion.

At the same time, the carabiner according to this invention may be locked and unlocked easily by the user using only one hand, even while wearing a glove.

Furthermore, the carabiner according to this invention always allows, at first glance, to identify whether the correct locking has occurred in closing or not. In other words, the user, just by looking at the carabiner from a distance, is able to establish with absolute certainty that it has been locked or unlocked. In fact, the mere rotation of the divider element implies that the lever has been locked.

Therefore, the user is always aware of the operating condition of the carabiner, and is always able to switch from the closed or locked configuration to the open or unlocked configuration, easily, using only one hand, even when wearing a glove.

Furthermore, as shown, the carabiner according to this invention is at least a "three-way lock" with the possibility of being fixed in the unlocked position, exactly like a normal carabiner without a lock. Therefore, the user may use the carabiner as a normal device without a lock and, when necessary, the carabiner may be permanently closed, becoming at least a "three-way lock" device.

In this way the carabiner is extremely safe in closing (because it is equipped with at least a three-way locking system) and at the same time practical to open because it is possible to easily remove the carabiner from the harness and insert the rope, even with more than one maneuver, to tie a knot in the carabiner.

The 'three-way lock' solutions of the prior art do not allow this simplified use of the carabiner and are, therefore, less easy to use when inserting the rope into the carabiner.

Finally, the carabiner according to this invention is inexpensive to manufacture and assemble.

A person skilled in the art, in order to satisfy contingent and specific needs, may make numerous modifications and variations to the solutions described above, these modifications and variations all being contained within the scope of the invention as defined in the following claims.

## Claims

1. A carabiner (4) with an at least triple-action safety locking mechanism comprising:
- an open ring (8), having an overall 'C' shape extending from a first end (12) to a second end (16) separate from each other,
- a lever (20) that may be opened, to open and close the ring (8) by connecting said first and second ends (12,16), the lever (20) being hinged to the first end (12) at a base (24) and being provided with a movable tip (28) suitable to interface with the second end (16), in order to connect said first and second ends (12,16) in a closed configuration of the carabiner (4),
- wherein the lever (20) comprises a main body (32) extending between the base (24) and the tip (28)
- wherein the carabiner (4) comprises a divider element (36) mechanically connected to a locking element (40) of the lever (20) configured to pass from a retracted configuration, in which it does not interfere with the second end (16), to an extracted configuration, in which it interferes with the second end (16) preventing the opening of the lever (20),
- the divider element (36) being movable from an unlocked or open position, in which the locking element (40) is in a retracted configuration, to a locked or closed position, in which the locking element (40) is in an extracted configuration.

2. The carabiner (4) with an at least triple-action safety locking mechanism according to claim 1, wherein the mechanical connection between the divider element (36) and the locking element (40) is achieved by inserting a lever and/or cam mechanism (44), or an eccentric, a slot, a groove, a cord, a toothed wheel.

3. The carabiner (4) with an at least triple-action safety locking mechanism according to claim 1 or 2, wherein said locking element (40) is a peg, a pin, a plug, a tube, at least partially inside the main body (32) of the lever (20).

4. The carabiner (4) with an at least triple-action safety locking mechanism according to claim 1 or 2, wherein said locking element (40) is a sleeve or a sliding bushing, at least partially outside the main body (32) of the lever (20).

5. The carabiner (4) with an at least triple-action safety locking mechanism according to claim 1 or 2, wherein said locking element (40) is a wire bent so as to interfere in abutment, in a closed and locked configuration, against the second end (16) preventing the opening of the lever (20).

6. The carabiner (4) having an at least triple-action safety locking mechanism according to claim 5, wherein said wire has overall a 'U' configuration comprising a pair of branches (41), hinged at the base (24), and connected by a bridge portion (43) that forms the undercut against the second end (16) of the ring (8).

7. The carabiner (4) with an at least triple-action safety locking mechanism according to claims 1 to 6, wherein said locking element (40) is a peg, pin, sleeve, tube, sliding bushing, which, in an extracted configuration, is at least partially housed in a housing (68) made in proximity to the second end (16) of the ring (8) .

8. The carabiner (4) with an at least triple-action safety locking mechanism according to any of the claims from 1 to 7, wherein the divider element (36) comprises at least one rod (48) hinged to said first end (12) and/or on the lever (20), and rotatable from the open position, in which it is placed parallel or in proximity to the lever (20), to the closed position, in which it is fixed on a support portion (52) of said ring (8) opposite the lever (20).

9. The carabiner (4) with an at least triple-action safety locking mechanism according to claim 8, wherein said support portion (52) comprises at least one locking/unlocking device (56) of the divider element (36) configured to lock and unlock the divider element (36) in said closed position.

10. The carabiner (4) with an at least triple-action safety locking mechanism according to claim 8, wherein said support portion (52) of the ring (8) is configured to interface with at least one locking/unlocking device (56) associated with the divider element (36) and configured to lock and unlock the divider element (36) in said closed position.

11. The carabiner (4) with an at least triple-action safety locking mechanism according to claim 10, wherein the divider element (36) is provided with at least one coupling element (39), configured to be able to, selectively, constrain the divider element (36) to the lever (20) or release them from each other.

12. The carabiner (4) having an at least triple-action safety locking mechanism according to claim 11, wherein said coupling element (39) is configured to transition from a deformed or compressed configuration, wherein it releases the divider element (36) and the lever (20) from each other, to an undeformed or extended configuration, wherein it constrains the divider element (36) and the lever (20) to each other.

13. A carabiner (4) having an at least triple-action safety locking mechanism according to claim 12, wherein said coupling element (39) is configured such that when the lever (20) and the divider element (36) are in a closed configuration, said coupling element (39) interferes with the second end (16) of the ring (8), bringing it into a deformed or compressed configuration, and when the lever (20) is moved to an open position, said coupling element (39) is extended.

14. The carabiner (4) with an at least triple-action safety locking mechanism according to claim 11, 12 or 13, wherein the coupling element (39) has an 'S' shape.

15. The carabiner (4) with an at least triple-action safety locking mechanism according to claim 11, 12, 13 or 14, wherein the coupling element (39) is constrained to the divider element (36) and has at least one coupling end (45) adapted to fit into a corresponding seat or stop (46) formed on the lever (20).

16. The carabiner (4) with an at least triple-action safety locking mechanism according to any of claims 9 to 15, wherein the locking/unlocking device (56) is configured to be elastically pressed and/or deformed to lock/unlocking the divider element (36), and wherein said locking/unlocking device (56) comprises at least one tab and/or slider.

17. The carabiner (4) with an at least a triple-action safety locking mechanism according to any of claims 9 to 16, wherein the locking/unlocking device (56) comprises a protuberance (60) configured to engage in a seat (64) formed on said divider element (36) or vice versa.

18. The carabiner (4) with an at least triple-action safety locking mechanism according to any of claims 9 to 17, wherein the divider element (36) comprises a pair of rods (48) hinged to said first end (12) and/or to said lever (20) and arranged on opposite sides with respect to the main body (32).

19. The carabiner (4) with an at least triple-action safety locking mechanism according to claim 18, wherein said support portion (52) comprises two locking/unlocking fins (56) of the divider element (36), each configured to lock and unlock a corresponding rod (48) of the divider element (36) in said closed position.

20. The carabiner (4) with an at least triple-action safety locking mechanism according to any of claims 1 to 19, wherein the divider element (36) is provided with a return spring (37) that biases the divider element (36) to elastically return to the open/closed position or a predetermined position.

## Patentansprüche

1. Karabiner (4) mit einem zumindest dreifach wirkenden Sicherheitsverriegelungsmechanismus, umfassend:
- einen offenen Ring (8) mit insgesamt einer C-Form, der bzw. die sich von einem ersten Ende (12) zu einem zweiten Ende (16) erstreckt, die voneinander getrennt sind,
- einen Hebel (20), der geöffnet werden kann, um den Ring (8) durch Verbinden des ersten und des zweiten Endes (12, 16) zu öffnen und zu schließen, wobei der Hebel (20) an einer Basis (24) an dem ersten Ende (12) angelenkt ist und mit einer beweglichen Spitze (28) versehen ist, die geeignet ist, mit dem zweiten Ende (16) zusammenzutreffen, um das erste und das zweite Ende (12, 16) in einer geschlossenen Konfiguration des Karabiners (4) zu verbinden,
- wobei der Hebel (20) einen Hauptkörper (32) umfasst, der sich zwischen der Basis (24) und der Spitze (28) erstreckt,
- wobei der Karabiner (4) ein Trennelement (36) umfasst, das mechanisch mit einem Verriegelungselement (40) des Hebels (20) verbunden ist, das konfiguriert ist, aus einer eingezogenen Konfiguration, in der es nicht mit dem zweiten Ende (16) zusammentrifft, in eine ausgezogene Konfiguration überzugehen, in der es mit dem zweiten Ende (16) zusammentrifft und das Öffnen des Hebels (20) verhindert,
- wobei das Trennelement (36) aus einer entriegelten oder offenen Position, in der sich das Verriegelungselement (40) in einer eingezogenen Konfiguration befindet, in eine verriegelte oder geschlossene Position bewegbar ist, in der sich das Verriegelungselement (40) in einer ausgezogenen Konfiguration befindet.

2. Karabiner (4) mit einem zumindest dreifach wirkenden Sicherheitsverriegelungsmechanismus nach Anspruch 1, wobei die mechanische Verbindung zwischen dem Trennelement (36) und dem Verriegelungselement (40) durch Einsetzen eines Hebels und/oder Nockenmechanismus (44) oder eines Exzenters, eines Schlitzes, einer Nut, einer Schnur, eines Zahnrads erreicht wird.

3. Karabiner (4) mit einem zumindest dreifach wirkenden Sicherheitsverriegelungsmechanismus nach Anspruch 1 oder 2, wobei das Verriegelungselement (40) ein Stift, ein Bolzen, ein Stopfen, ein Rohr zumindest teilweise innerhalb des Hauptkörpers (32) des Hebels (20) ist.

4. Karabiner (4) mit einem zumindest dreifach wirkenden Sicherheitsverriegelungsmechanismus nach Anspruch 1 oder 2, wobei das Verriegelungselement (40) eine Hülse oder eine Gleitbuchse zumindest teilweise außerhalb des Hauptkörpers (32) des Hebels (20) ist.

5. Karabiner (4) mit einem zumindest dreifach wirkenden Sicherheitsverriegelungsmechanismus nach Anspruch 1 oder 2, wobei das Verriegelungselement (40) ein Draht ist, der so gebogen ist, dass er in einer geschlossenen und verriegelten Konfiguration gegen das zweite Ende (16) anliegt und das Öffnen des Hebels (20) verhindert.

6. Karabiner (4) mit einem zumindest dreifach wirkenden Sicherheitsverriegelungsmechanismus nach Anspruch 5, wobei der Draht insgesamt eine "U"-Konfiguration aufweist, die ein Paar Abzweigungen (41) umfasst, die an der Basis (24) angelenkt sind und durch einen Brückenabschnitt (43) verbunden sind, der den Hinterschnitt gegen das zweite Ende (16) des Rings (8) bildet.

7. Karabiner (4) mit einem zumindest dreifach wirkenden Sicherheitsverriegelungsmechanismus nach den Ansprüchen 1 bis 6, wobei das Verriegelungselement (40) ein Stift, ein Bolzen, eine Hülse, ein Rohr oder eine Gleitbuchse ist, die in einer ausgezogenen Konfiguration zumindest teilweise in einem Gehäuse (63) untergebracht ist, das in der Nähe des zweiten Endes (16) des Rings (8) ausgebildet ist.

8. Karabiner (4) mit einem zumindest dreifach wirkenden Sicherheitsverriegelungsmechanismus nach einem der Ansprüche 1 bis 7, wobei das Trennelement (36) zumindest eine Stange (48) umfasst, die an dem ersten Ende (12) und/oder an dem Hebel (20) angelenkt ist und aus der offenen Position, in der sie parallel oder in der Nähe des Hebels (20) platziert ist, in die geschlossene Position drehbar ist, in der sie an einem Stütz- bzw. Trägerabschnitt (52) des Rings (8) gegenüberliegend bzw. entgegengesetzt zu dem Hebel (20) befestigt ist.

9. Karabiner (4) mit einem zumindest dreifach wirkenden Sicherheitsverriegelungsmechanismus nach Anspruch 8, wobei der Stützabschnitt (52) zumindest eine Verriegelungs-/Entriegelungsvorrichtung (56) des Trennelements (36) umfasst, die konfiguriert ist, das Trennelement (36) in der geschlossenen Position zu verriegeln und zu entriegeln.

10. Karabiner (4) mit einem zumindest dreifach wirkenden Sicherheitsverriegelungsmechanismus nach Anspruch 8, wobei der Stützabschnitt (52) des Rings (8) konfiguriert ist, mit zumindest einer Verriegelungs-/Entriegelungsvorrichtung (56) zusammenzutreffen, die mit dem Trennelement (36) assoziiert bzw. verbunden ist und konfiguriert ist, das Trennelement (36) in der geschlossenen Position zu verriegeln und zu entriegeln.

11. Karabiner (4) mit einem zumindest dreifach wirkenden Sicherheitsverriegelungsmechanismus nach Anspruch 10, wobei das Trennelement (36) mit zumindest einem Kopplungselement (39) versehen ist, das so konfiguriert ist, dass es das Trennelement (36) selektiv an dem Hebel (20) halten oder diese voneinander lösen kann.

12. Karabiner (4) mit einem zumindest dreifach wirkenden Sicherheitsverriegelungsmechanismus nach Anspruch 11, wobei das Kopplungselement (39) konfiguriert ist, aus einer verformten oder komprimierten Konfiguration, in der es das Trennelement (36) und den Hebel (20) voneinander löst, in eine unverformte oder ausgefahrene bzw. gestreckte Konfiguration überzugehen, in der es das Trennelement (36) und den Hebel (20) aneinander hält.

13. Karabiner (4) mit einem zumindest dreifach wirkenden Sicherheitsverriegelungsmechanismus nach Anspruch 12, wobei das Kopplungselement (39) so konfiguriert ist, dass, wenn sich der Hebel (20) und das Trennelement (36) in einer geschlossenen Konfiguration befinden, das Kopplungselement (39) mit dem zweiten Ende (16) des Rings (8) zusammentrifft und es in eine verformte oder komprimierte Konfiguration bringt, und wenn der Hebel (20) in eine offene Position bewegt wird, das Kopplungselement (39) ausgefahren bzw. gestreckt wird.

14. Karabiner (4) mit einem zumindest dreifach wirkenden Sicherheitsverriegelungsmechanismus nach Anspruch 11, 12 oder 13, wobei das Kopplungselement (39) eine S-Form aufweist.

15. Karabiner (4) mit einem zumindest dreifach wirkenden Sicherheitsverriegelungsmechanismus nach Anspruch 11, 12, 13 oder 14, wobei das Kopplungselement (39) an dem Trennelement (36) gehalten ist und zumindest ein Kopplungsende (45) aufweist, das angepasst ist, in einen entsprechenden Sitz oder Stopp bzw. Anschlag (46) zu passen, der an dem Hebel (20) ausgebildet ist.

16. Karabiner (4) mit einem zumindest dreifach wirkenden Sicherheitsverriegelungsmechanismus nach einem der Ansprüche 9 bis 15, wobei die Verriegelungs-/Entriegelungsvorrichtung (56) konfiguriert ist, elastisch gepresst und/oder verformt zu werden, um das Trennelement (36) zu verriegeln/entriegeln, und wobei die Verriegelungs-/Entriegelungsvorrichtung (56) zumindest eine Lasche und/oder einen Schieber umfasst.

17. Karabiner (4) mit einem zumindest dreifach wirkenden Sicherheitsverriegelungsmechanismus nach einem der Ansprüche 9 bis 16, wobei die Verriegelungs-/Entriegelungsvorrichtung (56) einen Vorsprung bzw. eine Ausstülpung (60) aufweist, der bzw. die konfiguriert ist, in einen Sitz (64) einzugreifen, der an dem Trennelement (36) ausgebildet ist, oder umgekehrt.

18. Karabiner (4) mit einem zumindest dreifach wirkenden Sicherheitsverriegelungsmechanismus nach einem der Ansprüche 9 bis 17, wobei das Trennelement (36) ein Paar Stangen (48) umfasst, die an dem ersten Ende (12) und/oder an dem Hebel (20) angelenkt sind und in Bezug auf den Hauptkörper (32) auf gegenüberliegenden bzw. entgegengesetzten Seiten angeordnet sind.

19. Karabiner (4) mit einem zumindest dreifach wirkenden Sicherheitsverriegelungsmechanismus nach Anspruch 18, wobei der Stützabschnitt (52) zwei Verriegelungs-/Entriegelungslamellen (56) des Trennelements (36) umfasst, die jeweils konfiguriert sind, eine entsprechende Stange (48) des Trennelements (36) in der geschlossenen Position zu verriegeln und zu entriegeln.

20. Karabiner (4) mit einem zumindest dreifach wirkenden Sicherheitsverriegelungsmechanismus nach einem der Ansprüche 1 bis 19, wobei das Trennelement (36) mit einer Rückstellfeder (37) versehen ist, die das Trennelement (36) vorspannt, um elastisch in die offene/geschlossene Position oder eine vorbestimmte Position zurückzukehren.

## Revendications

1. Mousqueton (4) avec un mécanisme de verrouillage de sécurité au moins triple action comprenant :
- un anneau ouvert (8) ayant une forme globale en 'C' s'étendant depuis une première extrémité (12) à une seconde extrémité (16) séparées l'une de l'autre,
- un levier (20) qui peut être ouvert pour ouvrir et fermer l'anneau (8) par liaison desdites première et seconde extrémités (12, 16), le levier (20) étant articulé à la première extrémité (12) à une base (24) et étant doté d'un bout mobile (28) adapté pour faire interface avec la seconde extrémité (16) afin de relier lesdites première et seconde extrémités (12, 16) dans une configuration fermée du mousqueton (4),
- dans lequel le levier (20) comprend un corps principal (32) s'étendant entre la base (24) et le bout (28)
- dans lequel le mousqueton (4) comprend un élément de séparation (36) relié mécaniquement à un élément de verrouillage (40) du levier (20) configuré pour passer d'une configuration rétractée, dans laquelle il n'interfère pas avec la seconde extrémité (16), à une configuration extraite, dans laquelle il interfère avec la seconde extrémité (16) empêchant l'ouverture du levier (20),
- l'élément de séparation (36) étant mobile d'une position déverrouillée ou ouverte, dans laquelle l'élément de verrouillage (40) est dans une configuration rétractée, à une position verrouillée ou fermée, dans laquelle l'élément de verrouillage (40) est dans une configuration extraite.

2. Mousqueton (4) avec un mécanisme de verrouillage de sécurité au moins triple action selon la revendication 1, dans lequel la liaison mécanique entre l'élément de séparation (36) et l'élément de verrouillage (40) est obtenue par insertion d'un mécanisme à levier et/ou à came (44) ou une excentrique, une fente, une rainure, une corde, une roue dentée.

3. Mousqueton (4) avec un mécanisme de verrouillage de sécurité au moins triple action selon la revendication 1 ou 2, dans lequel ledit élément de verrouillage (40) est une cheville, un axe, un bouchon, un tube, au moins partiellement à l'intérieur du corps principal (32) du levier (20).

4. Mousqueton (4) avec un mécanisme de verrouillage de sécurité au moins triple action selon la revendication 1 ou 2, dans lequel ledit élément de verrouillage (40) est un manchon ou un manchon coulissant, au moins partiellement en dehors du corps principal (32) du levier (20).

5. Mousqueton (4) avec un mécanisme de verrouillage de sécurité au moins triple action selon la revendication 1 ou 2, dans lequel ledit élément de verrouillage (40) est un fil métallique plié de sorte à interférer en butée, dans une configuration fermée et verrouillée, contre la seconde extrémité (16) empêchant l'ouverture du levier (20).

6. Mousqueton (4) ayant un mécanisme de verrouillage de sécurité au moins triple action selon la revendication 5, dans lequel ledit fil métallique présente globalement une configuration en 'U' comprenant une paire de branches (41), articulées à la base (24), et reliées par une partie de pont (43) qui forme la contre-dépouille contre la seconde extrémité (16) de l'anneau (8).

7. Mousqueton (4) avec un mécanisme de verrouillage de sécurité au moins triple action selon les revendications 1 à 6, dans lequel ledit élément de verrouillage (40) est une cheville, un axe, un manchon, un tube, un manchon coulissant qui, dans une configuration extraite, est au moins partiellement logé dans un logement (68) réalisé à proximité de la seconde extrémité (16) de l'anneau (8).

8. Mousqueton (4) avec un mécanisme de verrouillage de sécurité au moins triple action selon l'une quelconque des revendications 1 à 7, dans lequel l'élément de séparation (36) comprend au moins une tige (48) articulée à ladite première extrémité (12) et/ou sur le levier (20), et rotative depuis la position ouverte, dans laquelle elle est placée parallèlement ou à proximité du levier (20), dans la position fermée, dans laquelle elle est fixée sur une partie de support (52) dudit anneau (8) opposé au levier (20).

9. Mousqueton (4) avec un mécanisme de verrouillage de sécurité au moins triple action selon la revendication 8, dans lequel ladite partie de support (52) comprend au moins un dispositif de verrouillage/déverrouillage (56) de l'élément de séparation (36) configuré pour verrouiller et déverrouiller l'élément de séparation (36) dans ladite position fermée.

10. Mousqueton (4) avec un mécanisme de verrouillage de sécurité au moins triple action selon la revendication 8, dans lequel ladite partie de support (52) de l'anneau (8) est configurée pour faire interface avec au moins un dispositif de verrouillage/déverrouillage (56) associé à l'élément de séparation (36) et configuré pour verrouiller et déverrouiller l'élément de séparation (36) dans ladite position fermée.

11. Mousqueton (4) avec un mécanisme de verrouillage de sécurité au moins triple action selon la revendication 10, dans lequel l'élément de séparation (36) est doté d'au moins un élément de couplage (39) configuré pour être capable sélectivement de restreindre l'élément de séparation (36) au levier (20) ou de les libérer l'un de l'autre.

12. Mousqueton (4) ayant un mécanisme de verrouillage de sécurité au moins triple action selon la revendication 11, dans lequel ledit élément de couplage (39) est configuré pour passer d'une configuration déformée ou compressée, dans laquelle il libère l'élément de séparation (36) et le levier (20) l'un de l'autre, dans une configuration non déformée ou étendue, dans laquelle il restreint l'élément de séparation (36) et le levier (20) l'un à l'autre.

13. Mousqueton (4) ayant un mécanisme de verrouillage de sécurité au moins triple action selon la revendication 12, dans lequel ledit élément de couplage (39) est configuré de sorte que lorsque le levier (20) et l'élément de séparation (36) sont dans une configuration fermée, ledit élément de couplage (39) interfère avec la seconde extrémité (16) de l'anneau (8), l'amenant dans une configuration déformée ou compressée, et lorsque le levier (20) est déplacé dans une position ouverte, ledit élément de couplage (39) soit étendu.

14. Mousqueton (4) avec un mécanisme de verrouillage de sécurité au moins triple action selon la revendication 11, 12 ou 13, dans lequel l'élément de couplage (39) a une forme de 'S'.

15. Mousqueton (4) avec un mécanisme de verrouillage de sécurité au moins triple action selon la revendication 11, 12, 13 ou 14, dans lequel l'élément de couplage (39) est restreint à l'élément de séparation (36) et comprend au moins une extrémité de couplage (45) adaptée pour s'insérer dans un siège ou une butée (46) correspondante formée sur le levier (20).

16. Mousqueton (4) avec un mécanisme de verrouillage de sécurité au moins triple action selon l'une quelconque des revendications 9 à 15, dans lequel le dispositif de verrouillage/déverrouillage (56) est configuré pour être pressé et/ou déformé élastiquement pour verrouiller/déverrouiller l'élément de séparation (36), et dans lequel ledit élément de verrouillage/déverrouillage (56) comprend au moins une patte et/ou un coulisseau.

17. Mousqueton (4) avec un mécanisme de verrouillage de sécurité au moins triple action selon l'une quelconque des revendications 9 à 16, dans lequel le dispositif de verrouillage/déverrouillage (56) comprend une protubérance (60) configurée pour venir en prise dans un siège (64) formé sur ledit élément de séparation (36) ou vice versa.

18. Mousqueton (4) avec un mécanisme de verrouillage de sécurité au moins triple action selon l'une quelconque des revendications 9 à 17, dans lequel l'élément de séparation (36) comprend une paire de tiges (48) articulées à ladite première extrémité (12) et/ou audit levier (20) et agencées sur des côtés opposés par rapport au corps principal (32).

19. Mousqueton (4) avec un mécanisme de verrouillage de sécurité au moins triple action selon la revendication 18, dans lequel ladite partie de support (52) comprend deux ailettes de verrouillage/déverrouillage (56) de l'élément de séparation (36), chacune étant configurée pour verrouiller et déverrouiller une tige correspondante (48) de l'élément de séparation (36) dans ladite position fermée.

20. Mousqueton (4) avec un mécanisme de verrouillage de sécurité au moins triple action selon l'une quelconque des revendications 1 à 19, dans lequel l'élément de séparation (36) est doté d'un ressort de rappel (37) qui incline l'élément de séparation (36) pour le rappeler élastiquement dans la position ouverte/fermée ou une position prédéterminée.
